# EUROPEAN PATENT APPLICATION

(11) **EP 0 731 042 A1**
(43) Date of publication of application: **11.09.1996**
(21) Application number: 96200645.8
(22) Date of filing: 08.03.1996
(51) Int. Cl.: B65G 51/26, B65G 51/34

(54) **Station for a pneumatic dispatch system**

(30) Priority: 08.03.1995 NL 9500458
(71) Applicant: Ergon Trans B.V., NL-7336 AL Apeldoorn (NL)
(72) Inventor: Dragt, Jan Coen, 7322 TH Apeldoorn (NL)
(74) Representative: Voncken, Bartholomeus Maria Christiaan

(57) **Abstract**

There is presented a station for a pneumatic dispatch conduit system for application in a pneumatic dispatch conduit system for pneumatic dispatch cartridges with access openings which are closed by hinged segments. The conduit system comprises, at the station, a broadened section (13) for allowing a pivotal motion of the segments (23) towards the opened position. A tapering transition section (14) between the conduit system and the broadened section may generate an automatic pivotal motion of the hinged segments between the opened and closed position (and vice versa).

## Description

The invention relates to a station for a pneumatic dispatch conduit system, comprising a closure lid attached to the end of the station, said station being meant for application in a pneumatic dispatch conduit system for pneumatic dispatch cartridges with access openings which are closed by hinged segments resiliently loaded towards an opened position. Pneumatic dispatch cartridges comprising such hinged segments are subject of the Dutch patent application 94.01684 in the name of applicant.

Through the closure lid which generally is opened and closed manually, pneumatic dispatch cartridges can be moved into and out of the station, respectively. A pneumatic system generates pressure differences using which the pneumatic dispatch cartridges move through the pneumatic dispatch conduit system.

It is an object of the invention to provide a station of this type which is further optimised relative to commercially available systems.

According to the present invention at the station the conduit system comprises a broadened section.

Within the conduit system, where the internal diameter of the conduits closely fits to the external diameter of the applied pneumatic dispatch cartridges, the hinged segments are closed. When a pneumatic dispatch cartridge reaches the station, especially its broadened section, the hinged segments, under influence of the spring force, can move towards the opened position such that the cartridge automatically is positioned in an opened position at the station such, that filling or emptying, respectively, of the cartridge is possible. Oppositely the cartridge will be closed again when it moves from the station into the conduit system.

If according to a preferred embodiment of the station the broadened section merges into the remaining part of the conduit system through a tapering section, the movement of the hinged segments of a pneumatic dispatch cartridge from the closed position towards the opened position and in reverse order occurs gradually.

A special embodiment of the station comprising such a broadened section is characterised in that a supply funnel connects to the closure lid, said funnel projecting collar-like into the broadened section. When a pneumatic dispatch cartridge reaches said broadened section from the conduit system the hinged segments move towards the opened position. Next in the opened position said hinged segments will engage behind the collar-like supply funnel such that the cartridge cannot be taken out of the station. Further like this the supply funnel so to say projects into the pneumatic dispatch cartridge making filling thereof extremely simple.

A pneumatic dispatch conduit system which is provided with stations comprising such a collar-like supply funnel allows the introduction of pneumatic dispatch cartridges with hinged segments into the pneumatic dispatch conduit system, but taking the cartridges away from the pneumatic dispatch conduit system is not possible without special measures.

Preferably the station according to the invention is characterised by driving means for engaging a pneumatic dispatch cartridge which is positioned at the station, for moving said cartridge into and out of the station, respectively.

In this respect moving into and out of the station, respectively, means moving a cartridge from the pneumatic dispatch conduit system into the station or from the station into the pneumatic dispatch conduit system, respectively. A pneumatic dispatch cartridge arriving through the pneumatic dispatch conduit system is engaged by the driving means and is positioned in the station in a controlled manner and will be held there when the driving means stop. In revers order a pneumatic dispatch cartridge positioned in the station and held by the driving means will be moved into the pneumatic dispatch conduit system by activation of the driving means. Using said driving means moving a pneumatic dispatch cartridge into and out of the station, respectively, occurs in a very controlled manner. Moreover the driving means, if at a standstill, can maintain the pneumatic dispatch cartridge in a well defined position such that the cartridge, after the closure lid has been opened, is accessable for filling or emtying, respectively.

For safety reasons it may be preferred that the driving means can be activated only when the closure lid is closed. By the application of a sensor, switch or alike cooperating with the closure lid, the driving means are automatically shut down when the closure lid is being opened. Like this one can avoid that in case of an opened closure lid dangerous situations are created.

A preferred embodiment of the station according to the invention is characterised in that the driving means comprise driving belts, which can engage the outside of a cartridge. A specific constructive embodiment is characterised in that the driving belts are toothed belts. In such a case the pneumatic dispatch cartridges themselves are provided with circumferentially extending cylindrical grooves of which the pitch equals the pitch of the teeth of the toothed driving belts. As a result a proper force transmittal between the driving belts and the pneumatic dispatch cartridge is obtained.

Further it is preferred that the driving means are suspended resiliently in the station. Thus the driving means automatically adjust their position to the dimensions of the pneumatic dispatch cartridge, like this guaranteeing a correct mutual contact therebetween under all circumstances.

During the transport of pneumatic dispatch cartridges through the pneumatic dispatch conduit system gusts of wind can occur which could lead to vibrations of the closure lid at the station. To prevent this it is possible that the station according to the invention comprises a spring-loaded venting valve having a closure force smaller than the closure force of the closure lid. Then the gusts of wind lead to opening and closing said venting valve whereas the closure lid remains closed.

Hereinafter the invention will be elucidated further referring to the drawing in which an embodiment of the station according to the invention is illustrated.
Fig. 1 shows a station according to the invention in section with a pneumatic dispatch cartridge therein in a first position,
fig. 2 shows the station of fig. 1 with a pneumatic dispatch cartridge in a second position; and
fig. 3 shows the station of fig. 1 with opened closure lid and with a pneumatic dispatch cartridge in a third position.

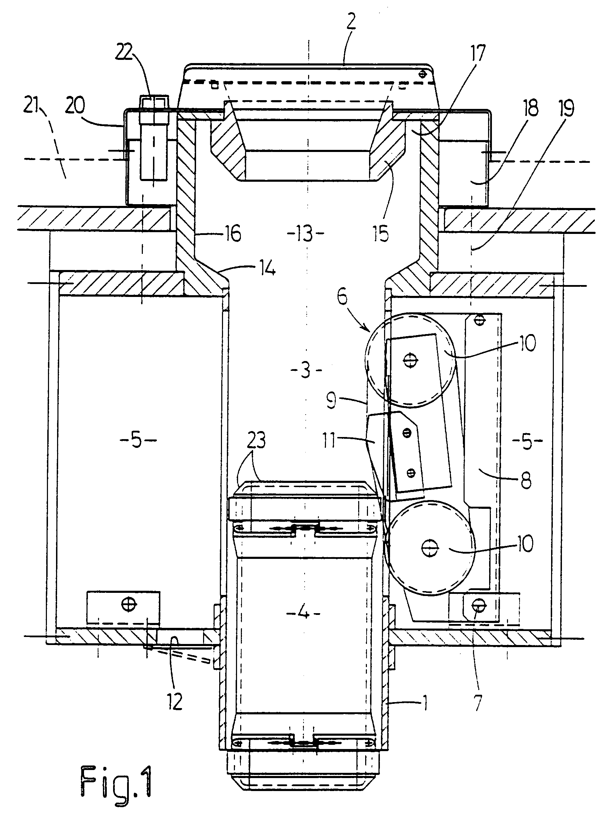

The station for a pneumatic dispatch conduit system illustrated in section in fig. 1 with a lower end 1 is connected to a pneumatic dispatch conduit system not shown further. The opposite upper end of the station comprises a movable closure lid 2.

The station comprises a central channel 3 of which the internal diameter basically corresponds with the external diameter of a pneumatic dispatch cartridge 4. The central channel 3 connects to chambers 5, two in the illustrated embodiment. Each chamber 5 houses driving means 6 (in fig. 1 only indicated in respect of the right chamber) which can engage the pneumatic dispatch cartridge 4.

The driving means 6 mainly comprise a carrier 8 which is pivotable against a spring force about an axis 7, on which carrier a driving belt 9 is mounted driven by a motor not shown in detail. The driving belt 9 extends around wheels 10. A support guide 11 ensures a correct guiding of the driving belt 9 as well as of the absorption of the kinetic energy of an arriving pneumatic dispatch cartridge 4.

The spring force applied onto the carrier 8 strives to rotate it about the axis 7 towards the central channel 3.

In the bottom of the chamber 5 illustrated at the left side a spring loaded venting valve 12 is provided of which the closure force is smaller than the closure force of the closure lid 2. As a result wind gusts created by a pneumatic system connected to the pneumatic dispatch conduit system will not lead to vibrations of the closure lid 2.

Above the chambers 5 the central channel 3 merges into a broadened section 13, wherein the transition between the central channel 3 and the broadened section 13 is defined by a tapering section 14.

To the closure lid 2 a supply funnel 15 connects which projects collar-like into the broadened section 13. As a result a ring shaped channel 17 is defined between the internal circumferential wall 16 of the broadened section and the supply funnel 15.

Without being complete and referring to fig. 1 compensation means 18, mounting means 19 and a cover plate 20 are mentioned, using which the station can be mounted in a furniture top 21 or alike having variable thickness.

A start button 22 mounted in the cover plate 20 completes the station.

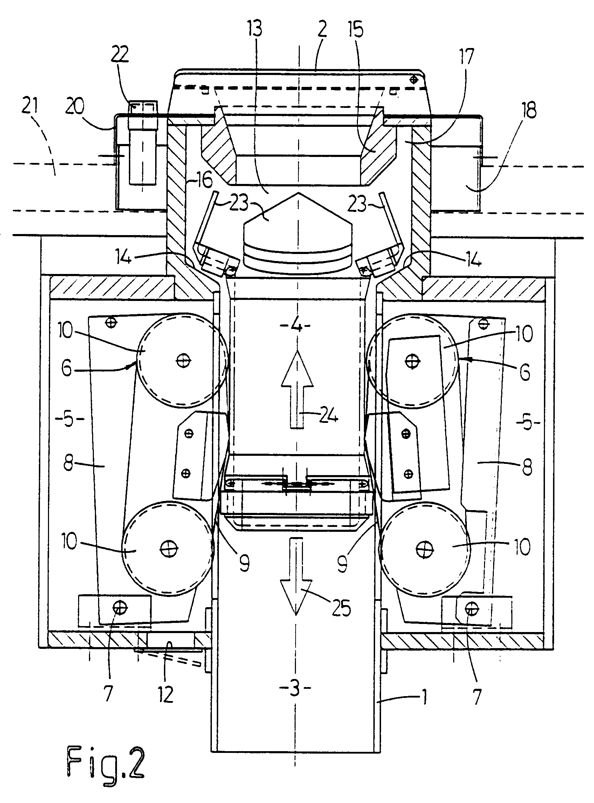

Before, referring to fig. 1-3, describing the operation of the station according to the invention it is noted that the pneumatic dispatch cartridge 4 which is applied to the station in the illustrated embodiment, already has been described in Dutch patent application 94.01684 in the name of applicant. This pneumatic dispatch cartridge 4 is characterised in that the (or each) access opening is defined by segments 23 hingeable between a closure position and an opened position (see fig. 2).

These hinged segments 23 are springloaded towards the opened position.

In the position represented in fig. 1 the cartridge 4 is positioned in the central channel 3. The walls of the central channel 3 engage the segments 23 and obstruct these in hinging towards the opened position. Thus the cartridge 4 is closed. Under influence of the pressure in the pneumatic dispatch conduit system the cartridge will reach the respective station and will engage the driving means 6, especially the driving belt 9 thereof. Next the driving belt 9 conveys the cartridge 4 in the direction of the closure lid 2. Simultaneously the carrier 8 will pivot against the respective spring force, such far that the cartridge 4 can pass the driving means 6.

It has not been illustrated that the driving belts 9 could comprise a toothing, cooperating with a ribbed wall (not shown either) of the pneumatic dispatch cartridge 4. Thus a proper engagement of the driving belts with the pneumatic dispatch cartridge 4 is obtained.

In the position of the pneumatic dispatch cartridge 4 illustrated in fig. 1 (and as will appear also in fig. 2) the closure lid 2 is closed. Means not shown further may be applied to stop the driving means 6 when the closure lid 2 is opened in such a position of the pneumatic dispatch cartridge 4. This increases the safety of the station.

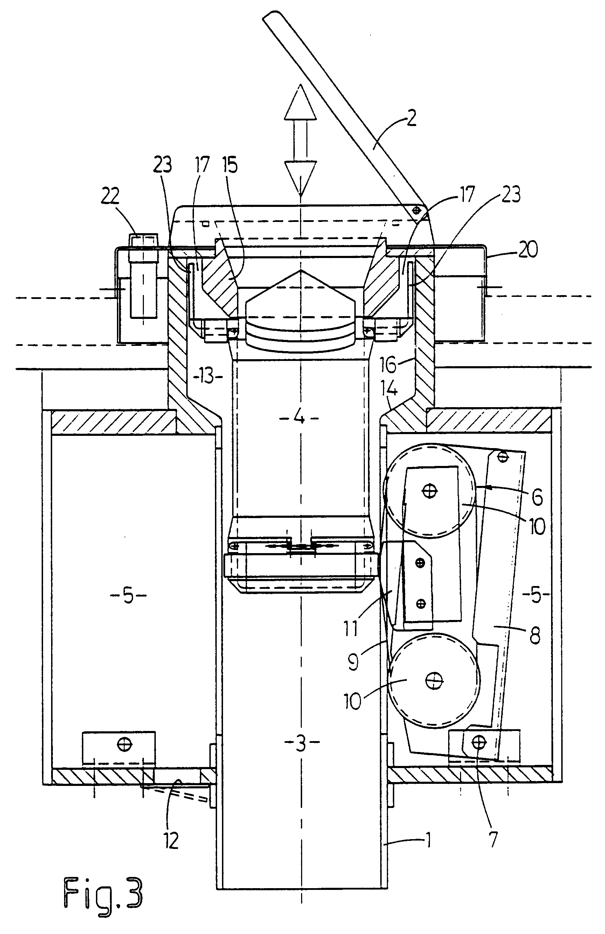

In fig. 2 a position of the pneumatic dispatch cartridge 4 is illustrated in which it is moved upwards in the direction of arrow 24 by means of the driving means 6 and has reached the broadened section 13. At the tapering section 14 the walls of the central channel 3 diverge, such that the hinged segments 23 can fully pivot to an open position under influence of the springload acting thereupon. This pivotal motion will eventually lead to a fully opened position of the segments 23 (as appears from fig. 3).

In reverse order the wall at the tapering section 14 will move back the hinged segments 23 from the opened position towards the closed position when the driving means 6 operate in opposite direction and move the pneumatic dispatch cartridge in the direction of arrow 25.

Finally fig. 3 represents the final position of the pneumatic dispatch cartridge 4. In this position the segments 23 are fully opened and are housed in the ring shaped channel 17. As a result the supply funnel 15 exactly connects to the outside of the pneumatic dispatch cartridge 4, such that feeding subject matter into this pneumatic dispatch cartridge (or removing it therefrom) can be accomplished easily. Of course the closure lid 2 is opened for this reason. The driving means 6 are disactivated.

When in the position shown in fig. 3 subject matter has been fed into the pneumatic dispatch cartridge 4 at the station the closure lid 2 is closed and the starting button 22 is pushed. This activates the driving means 6 and the pneumatic dispatch cartridge 4 is moved down until past these driving means 6 and next is conveyed through the pneumatic dispatch conduit system towards another station under influence of pressure differences generated by the pneumatic system not shown in detail.

The shape of the supply funnel 15 and its position relative to the internal wall 16 of the broadened section 13 prohibits the removal of the pneumatic dispatch cartridges 4 from the system at the station. For, the segments 23 will pivot towards the open position illustrated in fig. 3 and will then engage the ring shaped channel 17. It is however possible to bring pneumatic dispatch cartridges 4 in the system at the station, or removing these therefrom, that is by unscrewing the closure lid and the supply funnel 15 and next bringing a pneumatic dispatch cartridge 4 into the system or removing it therefrom.

The invention is not limited to the embodiment described before which can be varied widely within the scope of the invention as defined by the claims. The number and kind of driving means may differ from what is shown.

## Claims

1. Station for a pneumatic dispatch conduit system, comprising a closure lid attached to the end of the station, said station being meant for application in a pneumatic dispatch conduit system for pneumatic dispatch cartridges with access openings which are closed by hinged segments resiliently loaded towards an opened position, **characterised** in that at the station the conduit system comprises a broadened section.

2. Station according to claim 1, **characterised** in that the broadened section merges into the remaining part of the conduit system through a tapering section.

3. Station according to claim 1 or 2, **characterised** in that a supply funnel connects to the closure lid, said funnel projecting collar-like into the broadened section.

4. Station according to one of the preceeding claims, **characterised** by driving means for engaging a pneumatic dispatch cartridge which is positioned at the station, for moving said cartridge into and out of the station, respectively.

5. Station according to claim 4, **characterised** in that the driving means can be activated only when the closure lid is closed.

6. Station according to claim 4 or 5, **characterised** in that the driving means comprise driving belts, which can engage the outside of a cartridge.

7. Station according to claim 6, **characterised** in that the driving belts are toothed belts.

8. Station according to one of the claims 4-7, **characterised** in that the driving means are suspended resiliently in the station.

9. Station according to one of the previous claims, **characterised** by a spring-loaded venting valve having a closure force smaller than the closure force of the closure lid.
